Europäisches Patentamt

European Patent Office

Office européen des brevets

(11) Numéro de publication: **0 346 550**

**A1**

(12) **DEMANDE DE BREVET EUROPEEN**

(21) Numéro de dépôt: **88402621.2**

(22) Date de dépôt: **18.10.88**

(51) Int. Cl.⁴: **A23G 9/06 , A23G 9/02**

(30) Priorité: **17.06.88 FR 8808154**

(43) Date de publication de la demande:
**20.12.89 Bulletin 89/51**

(84) Etats contractants désignés:
**AT BE CH DE ES FR GB GR IT LI LU NL SE**

(71) Demandeur: **Gouin, Gérard**
**Résidence Parc Borghèse Rue Duvergier**
**F-33200 Bordeaux Cauderan(FR)**

Demandeur: **Gouin, Eduard**
**Domaine de Margès**
**F-26260 Saint Donnat(FR)**

(72) Inventeur: **Gouin, Gérard**
**Résidence Parc Borghèse Rue Duvergier**
**F-33200 Bordeaux Cauderan(FR)**
Inventeur: **Gouin, Eduard**
**Domaine de Margès**
**F-26260 Saint Donnat(FR)**

(74) Mandataire: **Portal, Gérard et al**
**Cabinet Beau de Loménie 55, rue**
**d'Amsterdam**
**F-75008 Paris(FR)**

(54) **Procédé de fabrication de produits glacés tels que crèmes glacées, glaces ou sorbets alimentaires et produits glacés, tels que crèmes glacées, glaces ou sorbet obtenus par ce procédé.**

(57) L'invention concerne un procédé de fabrication de produits glacés tels que crèmes glacées, glaces ou sorbets alimentaires et produits glacés, tels que crèmes glacées, glaces ou sorbets obtenus par ce procédé.
ou sorbets alimentaires.

Ce procédé de fabrication de produits glacés, tels que crèmes glacées, glaces ou sorbets alimentaires, à partir de matière première correspondante au produit glacé souhaité, caractérisé en ce qu'on incorpore un fluide frigorigène sous une forme physique capable de libérer des frigories à ladite matière première jusqu'a obtention d'un produit glacé d'une consistance pâteuse ; de préférence, on procède ensuite à une congélation pour obtenir lesdits produits glacés sous forme congelée en vue de leur stockage habituel dans des congélateurs classiques, en attendant leur consommation.

On obtient ainsi des produits glacés, tels que crèmes glacés, glaces ou sorbets alimentaires essentiellement sans cristaux de glace et présentant une onctuosité améliorée.

EP 0 346 550 A1

## Procédé de fabrication de produits glacés tels que crèmes glacées, glaces ou sorbets alimentaires et produits glacés, tel que crèmes glacées, glaces ou sorbets obtenus par ce procédé.

L'invention concerne essentiellement un procédé de fabrication de produits glacés tels que crèmes glacées, glaces ou sorbets alimentaires et produits glacés, tel que crèmes glacées, glaces ou sorbets obtenus par ce procédé.

Les glaces ou sorbets sont bien connus et sont consommés en quantités très importantes chaque année. Actuellement, les glaces ou sorbets sont préparés dans des machines à glaces puis soumis à une congélation à une température voisine de -40°C en faisant traverser la glace ou le sorbet préalablement préparé, mis dans leur emballage, dans un tunnel de congélation.

Pour ce faire, selon ce procédé antérieurement connu, il est nécessaire d'utiliser des émulsifiants tels que gommes de guar, alginates, etc. pour aider à retarder la formation de cristaux de glace et permettre à la glace ou le sorbet de se décongeler moins rapidement et de garder une onctuosité agréable.

Le procédé actuellement utilisé ne permet pas toujours d'éviter la formation de cristaux de glace. Il présente une faible onctuosité.

En outre, sa prise en masse n'est par immédiate, ce qui cause une perte d'arômes.

Les procédés actuels ne permettent pas de transformer en glaces ou sorbets des jus de fruits fragiles sans l'emploi de traitements thermiques destinés à leur stabilisation.

La présente invention a donc pour but de résoudre le nouveau problème technique consistant en la fourniture d'un procédé de fabrication de produits glacés tels que crèmes glacées, glaces ou sorbets alimentaires essentiellement sans formation de cristaux de glace, avec amélioration de l'onctuosité des glaces ou sorbets obtenus.

La présente invention a encore pour but de résoudre le nouveau problème technique consistant en la fourniture d'un procédé de fabrication de produits glacés tels que crèmes glacées, glaces ou sorbets évitant en outre l'utilisation d'émulsifiants tout en présentant une meilleure onctuosité, dont la prise en masse est sensiblement immédiate en évitant ainsi, entre autres, une perte d'arômes.

La présente invention a encore pour but de résoudre le nouveau problème technique consistant en la fourniture d'un procédé de fabrication de produits glacés, tels que crèmes glacées, glaces ou sorbets utilisables pour la transformation en glace de produits fragiles sans nécessiter de traitement thermique de stabilisation.

La présente invention a encore pour but de résoudre le nouveau problème technique consistant en la fourniture d'un procédé de fabrication de produits glacés, tels que crèmes glacées, glaces ou sorbets permettant de produire des produits glacés tels que crèmes glacées, glaces ou sorbets se décongelant moins rapidement grâce à une congélation "moléculaire", en particulier due à une durée de traitement réduite.

Enfin, la présente invention a encore pour but de résoudre le nouveau problème technique consistant en la fourniture d'un procédé de fabrication de produits glacés, tels que crèmes glacées, glaces ou sorbets très aisé à réaliser, en un temps très court, d'un faible coût, utilisable à l'échelle industrielle.

Tous ces nouveaux problèmes techniques sont résolus pour la première fois, d'une manière simultanée, par la présente invention.

Ainsi, selon un premier aspect, la présente invention fournit un procédé de fabrication de produits glacés, tels que crèmes glacées, glaces ou sorbets alimentaires, à partir de matière première correspondante au produit glacé souhaité, caractérisé en ce qu'on incorpore un fluide frigorigène sous une forme physique capable de libérer des frigories à ladite matière première jusqu'a obtention d'un produit glacé d'une consistance pâteuse ; de préférence, on procède ensuite à une congélation pour obtenir lesdits produits glacés sous forme congelée en vue de leur stockage habituel dans des congélateurs classiques, en attendant leur consommation.

Selon une autre caractéristique, l'invention fournit un procédé précité caractérisé en ce que le fluide frigorigène est sous forme liquide, solide ou gazeuse.

Selon encore une autre caractéristique de l'invention le procédé précité est caractérisé en ce que le fluide frigorigène comprend de la neige carbonique.

Selon une caractéristique avantageuse du procédé selon l'invention, on utilise de 500 g à 2 kg de neige carbonique par kilogramme de matière première.

Selon une autre caractéristique avantageuse du procédé selon l'invention, la matière première est un jus ou une purée de fruits non sucré ou sucré, en particulier jusqu'à obtention d'un degré Brix d'environ 20°.

Selon encore une autre caractéristique avantageuse du procédé selon l'invention, on réalise l'incorporation du fluide frigorigène précité progressivement, sous agitation, en particulier sur une période de quelques minutes.

Selon une autre caractéristique du procédé selon l'invention, on ajoute éventuellement des adjuvants et/ou émulsifiants choisis parmi les adjuvants et/ou émulsifiants classiques, comme les gommes guar, de caroube, des pectines, des alginates.

Selon encore une autre caractéristique du procédé selon l'invention, avant la congélation précitée, on introduit le produit glacé précité de consistance pâteuse dans leur emballage, ce qui permet d'obtenir un produit glacé congelé dans son emballage définitif, permettant une manipulation de celui-ci jusqu'à sa consommation.

Selon un deuxième aspect, la présente invention couvre également les produits glacés, tels que crèmes glacées, glaces ou sorbets obtenus par le procédé précité.

Grâce au procédé selon l'invention, les produits glacés obtenus ne contiennent essentiellement pas de cristaux de glace. Ils sont plus onctueux, même sans addition d'adjuvants et/ou émulsifiants.

Grâce à l'emploi de fluide frigorigène, en particulier la neige carbonique, la prise en masse est immédiate et évite, entre autres, la perte d'arômes.

Ce procédé est extrêmement simple et peut être appliqué à la transformation en glaces ou sorbets de jus de fruits même fragiles qui nécessiteraient normalement un traitement thermique destiné à les stabiliser.

On obtient, d'une manière totalement inattendue, un sorbet ou une glace se décongelant moins rapidement grâce à une congélation "moléculaire" en particulier en raison du fait de la rapidité du traitement de surgélation ou congélation.

Il est à noter que l'ajout du fluide frigorigène en particulier la neige carbonique a lieu jusqu'à obtention d'une consistance pâteuse, c'est-à-dire la consistance d'une pâte étalable au couteau.

En général, lorsqu'on obtient cette consistance pâteuse, la température du jus ou de la purée de fruits, qui est à ce moment pratiquement un sorbet ou une glace est comprise entre environ - 2° C et environ - 10° C.

Divers exemples de préparation de glaces ou sorbets sont donnés ci-après, à titre d'illustration, et qui ne sauraient donc en aucune façon limiter la portée de l'invention.

Exemple 1

Sorbet de noix de coco

On prépare un sorbet ou une glace de noix de coco à partir du jus ou d'une purée de noix de coco obtenu à l'état brut que l'on dispose dans un malaxeur du type pétrin.

A ce jus ou cette purée, on ajoute progressivement, sous agitation, d'une quantité totale d'environ 500 g de neige carbonique par kilogramme de jus ou de purée de noix de coco ; ce qui permet d'aboutir à une consistance pâteuse.

On constate que cette pâte, qui constitue déjà en fait une glace ou sorbet, est à une température voisine de -2° C.

On verse cette pâte des emballages adéquats classiques pour le stockage et la commercialisation des produits dans les quantités désirées, puis on procède à une congélation de manière classique jusqu'à une température de l'ordre de -20 à -30° C en fonction du but recherché.

Selon une variante de réalisation de ce procédé, on peut sucrer au préalable le jus ou la purée de noix de coco, en particulier jusqu'a obtention d'un degré Brix de 20° environ.

Selon une autre variante de réalisation du procédé selon l'invention, on peut éventuellement additionner des adjuvants et/ou émulsifiants classiques pour répondre à certaines demande particulières.

On observe que les sorbets ou glaces ainsi obtenus ne présentent pas de cristaux de glace, présentent une onctuosité améliorée, tandis qu'essentiellement aucune perte d'arôme n'a eu lieu. En outre, sa décongélation est moins rapide que les glaces ou sorbets produits selon les procédés classiques.

Exemple 2

Sorbet ou glace de mangue

On procède comme à l'exemple 1 si ce n'est que l'on part de jus ou de purée de mangue, en utilisant la même proportion de neige de carbonique d'environ 500g/kg de jus ou de purée de mangue.

Lors de l'obtention de la masse de consistance pâteuse, la température de celle-ci est voisine de -5° C.

On obtient les mêmes propriétés des glaces ou sorbets qu'à l'exemple 1.

Exemple 3

Sorbet ou glace de fruits de la passion

On procède comme à l'exemple 1, si ce n'est que l'on utilise un jus ou purée de fruits de la passion.

Lors de l'obtention de la masse de consistance pâteuse, la température de cette masse est voisine de -4° C.

La produit présente également les même caractéristiques que celui de l'exemple 1.

Exemple 4

Sorbet ou glace de poire, d'abricot, de pêche

On fabrique des glaces ou sorbets, de poire, d'abricot ou de pêche à partir d'une purée d'au moins l'un de ces fruits, comme décrit à l'exemple 1 en employant environ 500 g de neige carbonique par kilogramme de purée de fruits.

La durée totale de l'addition, pour obtenir la consistance pâteuse précitée est inférieure. à 10 minutes.

On peut au préalable, selon une variante de réalisation, sucrer cette purée jusqu'à obtention d'un degré Brix de préférence d'environ 20°.

La congélation ultérieure est également réalisée en quelques minutes.

Ainsi, on peut dire qu'on peut réaliser industriellement des glaces ou sorbets alimentaires à partir de fruits frais en moins de 20 min, quelles que soient les quantités, ce qui constitue un progrès technique particulièrement important, inattendu pour l'homme de l'art.

Naturellement, le procédé selon l'invention est applicable à tous types de fruits et n'est donc pas limité à un fruit particulier.

Il en est de même sur la nature du fluide frigorigène. L'invention n'est donc pas limitée à l'emploi de neige carbonique qui constitue seulement un mode de réalisation actuellement préféré.

On peut encore utiliser le procédé de l'invention pour prépare toutes sortes de crèmes glacées sans restriction ni réserve et en particulier les crèmes glacées à la vanille, au café.

L'invention comprend donc tous les moyens constituant des équivalents techniques des moyens décrits ainsi que leurs diverses combinaisons.

**Revendications**

1. Procédé de fabrication de produits glacés, tels que crèmes glacées, glaces ou sorbets alimentaires, à partir de matière première correspondante au produit glacé souhaité, caractérisé en ce qu'on incorpore un fluide frigorigène sous une forme physique capable de libérer des frigories à ladite matière première jusqu'a obtention d'un produit glacé d'une consistance pâteuse ; de préférence, on procède ensuite à une congélation pour obtenir lesdits produits glacés sous forme congelée en vue de leur stockage habituel dans des congélateurs classiques, en attendant leur consommation.

2. Procédé selon la revendication 1, caractérisé en ce que le fluide frigorigène précité est sous forme liquide, solide ou gazeuse.

3. Procédé selon la revendication 1 ou 2, caractérisé en ce que le fluide frigorigène précité comprend de la neige carbonique.

4. Procédé selon la revendication 3, caractérisé en ce qu'on utilise de 500 g à 2 kg de neige carbonique par kilogramme de matière première.

5. Procédé selon l'une des revendications 1 ou 4, caractérisé en ce que la matière première est un jus ou une purée de fruits non sucrée ou sucrée, en particulier jusqu'à obtention d'un degré Brix d'environ 20°.

6. Procédé selon l'une des revendications 1 à 5, caractérisé en ce qu'on réalise l'incorporation du fluide frigorigène précité, progressivement, sous agitation, en particulier sur une période de quelques minutes.

7. Procédé selon l'une quelconque des revendications 1 à 6, caractérisé en ce qu'avant la congélation, on introduit le produit glacé de consistance pâteuse dans son emballage.

8. Procédé selon l'une des revendications 1 à 7, caractérisé en ce qu'on ajoute un adjuvant et/ou un émulsifiant, en particulier une gomme guar, de caroube, une pectine, un alginate.

9. Produits glacés, tels que crèmes glacées, glaces ou sorbets, caractérisés en ce qu'ils sont obtenus par le procédé tel qui défini selon l'une quelconque des revendications 1 à 8.

# RAPPORT DE RECHERCHE EUROPEENNE

Office européen des brevets

Numero de la demande

EP 88 40 2621

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-1 005 399 (AMERICAN MACHINE & FOUNDRY CO.) * Exemples; tableaux I-IV; revendications * | 1-3,8,9 | A 23 G 9/06 A 23 G 9/02 |
| Y | --- | 4 | |
| Y | FR-A- 674 172 (VOGT INSTANT FREEZERS) * Page 1, lignes 40-47; page 3, lignes 86-96 * --- | 4 | |
| X | PATENT ABSTRACTS OF JAPAN, vol. 8, no. 273 (C-256)[1710], 13 décembre 1984; & JP-A-59 146 542 (KAZUO SAWAGUCHI) 22-08-1984 * Résumé * | 1-6,7,9 | |
| Y | IDEM. --- | 5,8 | |
| Y | EP-A-0 187 438 (YODOLO LTD) * Revendications * --- | 5,8 | |
| X | FR-A-2 491 730 (A. DAGUIN) * Page 2, revendications * --- | 1,2,6,9 | DOMAINES TECHNIQUES RECHERCHES (Int. Cl.4) A 23 G |
| X | US-A-2 029 025 (C.I. JUSTHEIM) * En entier * | 1-3,6,9 | |
| A | ----- | 4,5,7,8 | |

Le présent rapport a été établi pour toutes les revendications

| Lieu de la recherche | Date d'achèvement de la recherche | Examinateur |
|---|---|---|
| LA HAYE | 26-01-1989 | LEPRETRE F.G.M.J. |